# EUROPEAN PATENT SPECIFICATION

(11) **EP 2 000 629 B1**
(45) Date of publication and mention of the grant of the patent: **12.03.2014**
(21) Application number: 08157472.5
(22) Date of filing: 03.06.2008
(51) Int. Cl.: E21B 17/08, F16L 15/00, E21B 17/042, F16L 15/04

(54) **High strength threaded joint, particularly for lined tubes**
Hochstarke Schraubverbindung, insbesondere für ausgekleidete Rohre
Joint fileté haute résistance, particulièrement pour des tubes en ligne

(30) Priority: 05.06.2007 AR P070102406
(43) Date of publication of application: 10.12.2008
(73) Proprietor: Tenaris Connections Limited, Kingstown (VC)
(72) Inventor: Mazzaferro, Gastón Mauro, Buenos Aires (AR); Santi, Néstor Jesús, Buenos Aires (AR)
(74) Representative: Carpintero Lopez, Francisco

(56) References cited:
- EP-B- 0 104 720
- US-A- 4 706 997

## Description

The present invention is directed to joints for the connection of lined tubular members to be used as well tubings or well casings, depending on the tube diameter. An alternative application would be as line pipes.

Currently known threaded joints comprise a member that is internally threaded at both ends (female) - said joint being usually designated as sleeve or box, and two externally threaded (male) members matching the threaded surfaces of the female member, such that the members may be attached to each other by means of said threaded surfaces. One type of joint presently used is the one described in the API 5B Standard.

The length of the threaded section in this type of joint is limited, therefore the thread may become disengaged under tensile load or combined bending and tensile loads, or else the threads may be torn away under shear stress. The most frequent failure mode in this type of joints is disengagement.

Another feature of prior art joints is that they cause disturbances in the flow lines of fluid flowing within the tube to which the joint is attached; said disturbance being caused by a shoulder formed between the inner surfaces of the male and female members.

Typically, API joints may be applied to lined tubes by modifying the front end of the tube, i.e. the rounded nose of the tube, and applying a coating into the middle section of the joint, the so-called "J" section. This has the following disadvantages:
- the threaded section is interrupted, thus limiting the capability of the joint to transmit structural loads such as tensile, compression, bending or torsional loads;
- the use of threaded joints having 10 threads per each 2,54 cm (1 inch) in tubes smaller than 8.89 cm (32 inches) in diameter, has operational problems due to their increased tendency to misaligning and gripping during tightening up; and
- the "J" section implies a geometric discontinuity of the inner surface of the joint; therefore the tube front ends at the connection sections remain exposed and are subject to be hit by passing tools during service, which may damage their inner lining.

US-A-4706997 discloses a coupling for tubing with axial length of precision ring being selected to assure make up tightness adjusted to particular axial stress conditions. A pipe collar is provided with an internal precision makeup ring whose length along the pipe axis assures precise positioning and engagement. When the nose of the pipe is engaged with metal-to-metal contact against a reference shoulder on the precision ring a side surface on the nose end of the pipe engages a center seal ring disposed in the side wall of the collar between the reference shoulder and the threaded portion. The bullet nosed pipe shown in figure 10 is well known in the art and it is configured according to API 5B.

EP-B-0104720 relates to a tubular connection for heavy wall, high performance casing - comprises male and female threaded members with matching tapers.

Document AR20457B1, by the same applicant, defines a highly resistant threaded joint wherein the threaded surfaces have a round thread profile according to the API 5B Standard, and wherein the threaded length at each of the male ends is maximized as compared to the conventional joint described by such standard. In its thread-free end adjacent to the threaded section, each of the male ends has an annular surface located on a plane that is perpendicular to the joint axis. The joint can optionally comprise a central groove which may or may not house a ring made of polymeric material in order to improve the sealability of the joint. This joint performs better that the above mentioned joints, since it counteracts for the tendency of the joint to "jump out", increases the shear strength of threads when the joint is subjected to tensile loads or combined bending and tensile loads, and does not alter significantly the flow lines of the fluid flowing within the joint.

The Applicant has now added an improved capability to receive inner linings to the characteristics of the joint disclosed in document AR20457B, said improved capability being the object of the present invention.

To that purpose, the Applicant decided to use an 8 round API thread according to the API 5B standard, which vanishes in the tube body with non-upset ends, being the joint threaded all along its length. As mentioned before, in the joint of the invention the male tube ends are not in contact with each other. Said ends comprise two portions located between the upper threaded portion and the inner surface of each of the male ends, namely an upper portion and a lower portion. The upper portion is formed by a first thread bevel continuing in a first rounded area with a first radius of curvature, and the lower portion is formed by a second rounded area with a second radius of curvature. Said first and second radiuses of curvature are identical - 1.5 mm and constant - both thereby defining the tube front end. The radiuses of curvature are defined as the maximum possible radiuses of curvature to improve the adhesion features of the inner lining to the tube when the front end of the tube is of minimum thickness.

An elastomeric ring is housed in the center of the joint, said ring being compressed by both tube noses or male members, thus providing geometric continuity of the inner surface of the joint, and also providing continuity to the corrosion protection barrier of the inner lining of the tube. Said ring can optionally be fitted with at least one insert made of high strength and corrosion resistant material, such as for example stainless steel, which provides the ring with structural strength and also serves as a centering guide to the tools passing through the joint, which in turn provide structural protection to the inner lining in the area. The advantages of this joint are:
Thread length: threads vanishing in the tube body maximize the capability of the connection to transmit structural loads (tensile, compression, bending and torsional loads);
Thread pitch: A thread with 8 threads per inch (2.54mm) is used for the whole applicable range of tube diameters and thicknesses, allowing for a faster (with less turns) and a safer (without misaligning and less prone to gripping) tightening;
Elastomeric ring: it provides geometric continuity to the inner surface of the joint as well as to the corrosion protection barrier. It keeps the flowing fluid away from the thread, thus secondarily contributing to tightness of the connection. Optionally, the elastomeric ring comprises at least one metal insert of high hardness and corrosion resistance, such as for example stainless steel, which provides structural strength and serves as a centering guide for tools passing through the joint, thereby providing structural protection to the inner lining of the joint; and
"Non-upset ends" (NUE): which avoid alterations in the inner diameter of the joint that might expose the inner lining to damage from tools passing through the joint during service.

It is then an object of the present invention to provide a high-strength threaded joint, particularly for lined tubes, said joint comprising:
- a coupling with a threaded inner surface along its whole length with ends defined as female; and
- a pair of said tubes, each of them having ends, defined as male, with an external threaded surface and a thread-free end defined as nose; said joint having an 8 round API thread profile, according to standard API 5B, with a diameter interference from 0 to 2 mm; said joint characterized in that each of said noses comprises:

- an upper portion formed by a thread bevel with a slope of substantially 65 degrees, which continues on a first rounded area with a first radius of curvature of 1,5 mm; and a lower portion including a second rounded area with a second radius of curvature of 1,5 mm; said thread bevel overlapping with said thread and said first rounded area extending from said thread bevel up to a point of its curvature where a tangential line is perpendicular to the longitudinal axis of said tube, said second rounded area extending from a point of its curvature where a tangential line is perpendicular to the longitudinal axis of said tube up to the inner surface of said tube.

The invention will now be described in greater detail by means of the figures described below.

Figure 1 is a view of the central section or section "J" of the threaded joint of the invention.

Figure 2 shows the position of an elastomeric ring with a metal insert in said central section or section J",

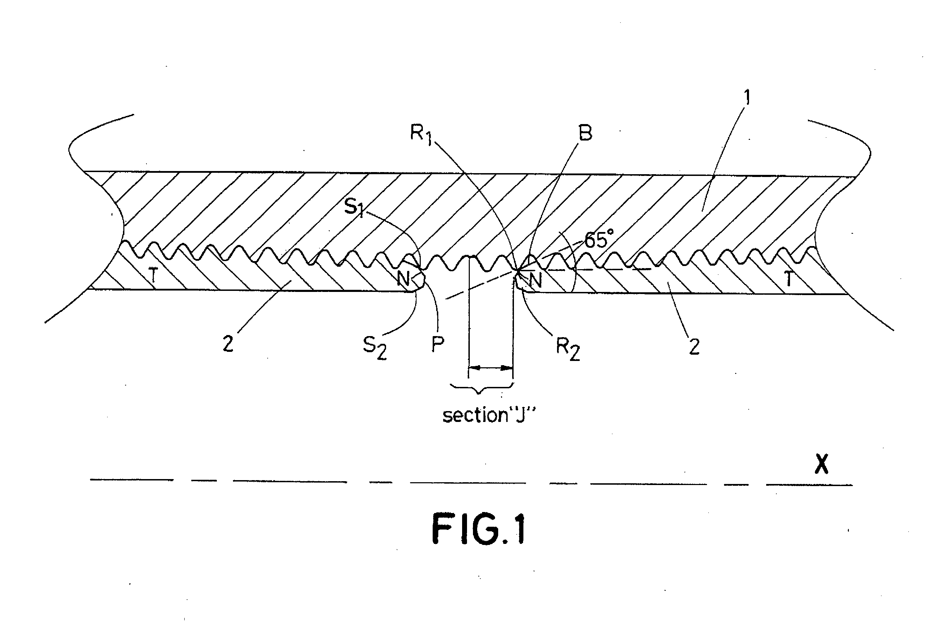

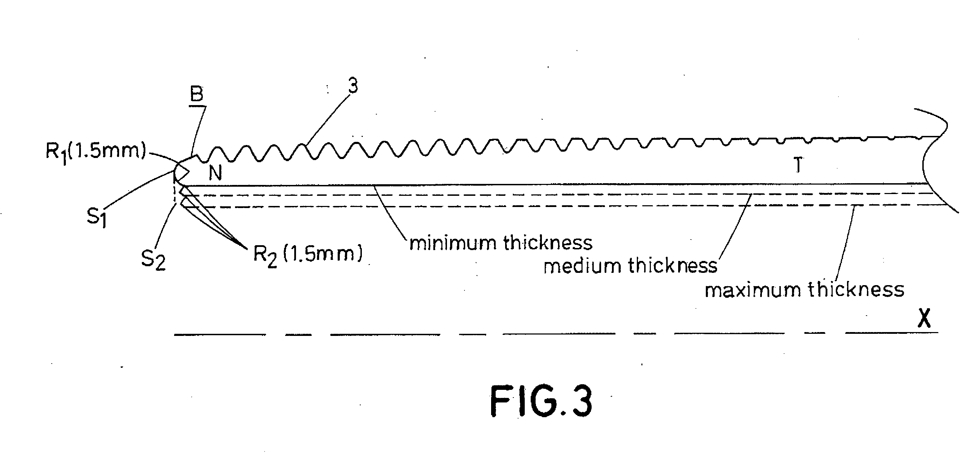

Figure 3 shows in more detail the structure of the thread-free end of the joint, or nose, according to different tube thicknesses. Figure 1 shows a coupling or female threaded member 1, on which inner surface the male threaded ends 2 of two tubes T are screwed together to form a threaded joint. This joint has a round thread profile 3 according to 8 round API standard with a diameter interference from 0 to 2 mm. Each of the thread-free ends of both male ends is a rounded nose N which, according to the present invention, has specific structural features. Each nose N is formed by an upper portion comprising a thread bevel B with a slope of substantially 65 degrees, which overlaps said thread 3, and which continues on a first rounded area S1 with a first radius of curvature R1, of 1.5 mm. Said first rounded area extends from said thread bevel B up to a point of its curvature where a tangential line is perpendicular to the longitudinal axis X of said tube T. Further on, a lower portion is defined which is formed by a second rounded area S2 having a second radius of curvature R2, also of 1.5 mm. Said second rounded area S2 extends from a point of its curvature where a tangential line is perpendicular to the longitudinal axis X of said tube T, up to the inner surface of said tube. Both radiuses of curvature R1 and R2 are located one next to the other in the case of a tube of minimum thickness. However, both radiuses of curvature R1,R2 are connected by means of a transition zone P in the case of tubes with medium or maximum thickness. Said transition zone P extends between said points of said rounded areas S1, S2 where a line tangential to said points is perpendicular to the longitudinal axis X of the tube T, as can be seen in Figure 3.

It should be remarked that the grooves between the crest and the valley of the threads are filled with grease, as is usually done with this type of threaded joints.

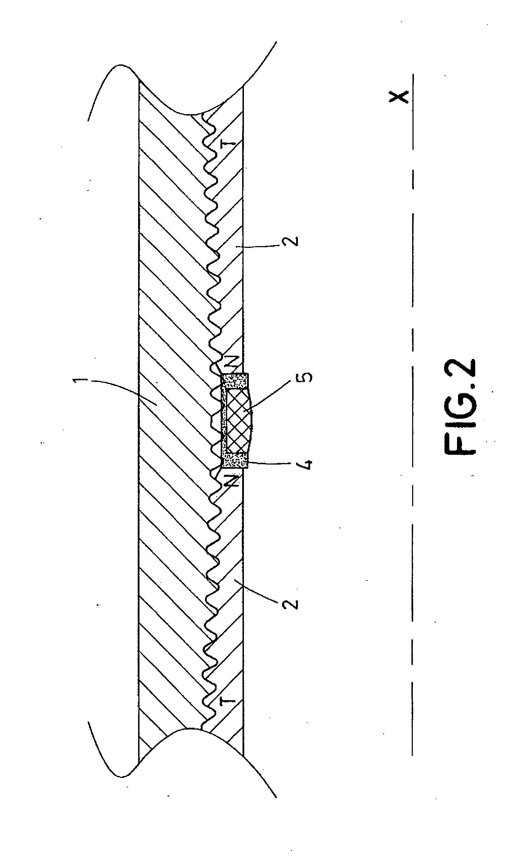

Figure 2 illustrates the same joint, but with the addition of an elastomeric ring 4 in said section "J". Said elastomeric ring 4 is laterally compressed by both noses N of the respective tubes. The purpose of the insertion of said elastomeric ring is to provide geometric continuity to the threaded joint in the central section or section "J", by separating the flowing fluid from the thread, and thus secondarily contributing to the tightness of the threaded joint. Optionally, said elastomeric ring 4 includes at least one metal insert 5 having high hardness and corrosion resistance, preferably made of stainless steel, which provides structural resistance and serves as a centering guide for the tools passing through the tube T, thus providing structural protection to the lining of the joint.

## Claims

1. A high-strength threaded joint, particularly for lined tubes comprising:
- a coupling (1) with a threaded inner surface along its whole length , its ends being defined as female ends; and
- a pair of tubes (T), each having ends (2), defined as male ends, with an external threaded surface and a thread-free end defined as a nose (N);
wherein each of said noses (N) comprises:
- an upper portion formed by a thread bevel (B) with a slope of substantially 65 degrees, which continues on a first rounded area (S1) with a first radius of curvature (R1); and
- a lower portion including a second rounded area (S2) with a second radius of curvature (R2);
said thread bevel (B) overlapping with said thread (3) and said first rounded area (S1) extending from said thread bevel (B) up to a point of its curvature where a tangential line is perpendicular to the longitudinal axis (X) of said tube (T), said second rounded area extending (S2) from a point of its curvature where a tangential line is perpendicular to the longitudinal axis (X) of said tube (T) up to the inner surface of said tube (T);
**characterized in that**
said joint has an 8 round API thread profile (3), according to the API 5B standard, with a diameter interference from 0 to 2 mm;
and **in that**
said first radius of curvature (R1) is 1.5 mm;
and **in that**
said second radius of curvature (R2) is 1.5 mm.

2. The threaded joint according to claim 1, **characterized in that** said first and second radiuses of curvature (R1, R2) are located one next to the other in the case of tubes (T) of minimum thickness.

3. The threaded joint according to claim 1, **characterized in that** said first and second radiuses of curvature (R1,R2) are connected to each other by means of a transition zone (P), in the case of tubes (T) of medium or maximum thickness.

4. The threaded joint according to claim 3, **characterized in that** said transition zone (P) extends between said points of said rounded areas (S1, S2) where a line tangential to said points is perpendicular to the longitudinal axis (X) of the tube (T).

5. The threaded joint according to claim 1, **characterized in that** between the noses (N) of both male threaded members (2) a central section is defined (J).

6. The threaded joint according to claim 5, **characterized in that** said central section (J) includes an elastomeric ring (4) which is laterally compressed by said noses (N) of said tubes (T).

7. The threaded joint according to claim 6, **characterized in that** said elastomeric ring (4) includes at least one metal insert (5), preferably made of stainless steel.

## Patentansprüche

1. Hochstarke Schraubverbindung, insbesondere für ausgekleidete Rohre, umfassend:
- eine Kupplung (1) mit einer Innenoberfläche die über die gesamte Länge ein Gewinde aufweist, und deren Enden als weibliche Enden definiert sind; und
- zwei Rohren (T) die jeweils Enden (2) haben, die als männlich definiert sind und einem Außengewinde und einem gewindefreien, als Nase (N) definierten Ende;
wobei jede der genannten Nasen (N) umfasst:
- einen durch eine Gewindefase (B) gebildeten oberen Teil mit einer Steigung von im Wesentlichen 65 Grad, die sich auf einem ersten abgerundeten Bereich (S1) mit einem ersten Krümmungsradius (R1) fortsetzt; und
- einen unteren Teil, der einen zweiten abgerundeten Bereich (S2) mit einem zweiten Krümmungsradius (R2) enthält;
die genannte Gewindefase (B) überschneidet sich mit dem genannten Gewinde (3) und dem genannte ersten abgerundeten Bereich (S1), dieser verläuft von der genannten Gewindefase (B) bis zu einem Punkt der Krümmung, an dem eine Tangente senkrecht zur Längsachse (X) des genannten Rohres (T) verläuft der genannte zweite abgerundete Bereich (S2) verläuft von einem Punkt der Krümmung, an dem eine Tangente senkrecht zur Längsachse (X) des genannten Rohres (T) verläuft, bis zur Innenoberfläche des genannten Rohres (T); **dadurch gekennzeichnet, dass** die genannte Verbindung ein 8-API-RD-Gewindeprofil (3) nach API-5B-Standard mit einem Durchmesserübermaß von 0 bis 2 mm hat; und dadurch, dass der genannte erste Krümmungsradius (R1) 1,5 mm beträgt; und dadurch, dass der genannte zweite Krümmungsradius (R2) 1,5 mm beträgt.

2. Schraubverbindung nach Anspruch 1, **dadurch gekennzeichnet, dass** die genannten ersten und zweiten Krümmungsradien (R1, R2) im Falle von Rohren (T) minimaler Stärke nebeneinander liegen.

3. Schraubverbindung nach Anspruch 1, **dadurch gekennzeichnet, dass** die genannten ersten und zweiten Krümmungsradien (R1, R2) im Falle von Rohren (T) mittlerer oder maximaler Stärke über einen Übergangsbereich (P) miteinander verbunden sind.

4. Schraubverbindung nach Anspruch 3, **dadurch gekennzeichnet, dass** der genannte Übergangsbereich (P) sich zwischen den genannten Punkten der genannten abgerundeten Bereiche (S1, S2) befindet, an denen eine Tangente senkrecht zur Längsachse (X) des Rohres (T) verläuft.

5. Schraubverbindung nach Anspruch 1, **dadurch gekennzeichnet, dass** zwischen den Nasen (N) beider männlichen Gewinde (2) ein mittlerer Abschnitt definiert ist (J).

6. Schraubverbindung nach Anspruch 5, **dadurch gekennzeichnet, dass** der genannte mittlere Abschnitt (J) über einen Elastomerring (4) verfügt, der seitlich durch die genannten Nasen (N) der genannten Rohre (T) zusammengepresst wird.

7. Schraubverbindung nach Anspruch 6, **dadurch gekennzeichnet, dass** der genannte Elastomerring (4) über mindestens einen Metalleinsatz (5) enthält, der vorzugsweise aus Edelstahl hergestellt ist.

## Revendications

1. Joint fileté de haute résistance en particulier pour des tubes recouverts comprenant :
- un élément d'accouplement (1) ayant une surface interne filetée sur la totalité de sa longueur, ses extrémités étant définies entant qu'extrémités femelles, et
- une paire de tubes (T) ayant chacun des extrémités (2) définies entant qu'extrémités mâles, avec une surface externe filetée et une extrémité exempte de filetage définie entant que bec (N),
dans lequel chacun des becs (N) comporte :
- une partie supérieure formée par un chanfrein fileté (B) ayant une pente d'essentiellement 65° qui se prolonge par une première zone arrondie (S1) ayant un premier rayon de courbure (R1), et
- une partie inférieure comportant une seconde zone arrondie (S2) ayant un second rayon de courbure (R2), le chanfrein fileté (B) se recoupant avec le filetage (3) et la première zone arrondie (S1) s'étendant à partir du chanfrein fileté (B) jusqu'à un point de sa courbure où sa tangente est perpendiculaire à l'axe longitudinal (X) du tube (T), la seconde zone arrondie (S2) s'étendant à partir d'un point de sa courbure où sa tangente est perpendiculaire à l'axe longitudinal (X) du tube (T) jusqu'à la surface interne de ce tube (T),
**caractérisé en ce que**
le joint à un profil de filetage rond (3) de 8 selon la norme API 5B avec une interférence de diamètre de 0 à 2 mm, et
le premier rayon de courbure (R1) est égal à 1,5 mm tandis que le second rayon de courbure (R2) est égal à 1,5 mm.

2. Joint fileté conforme à la revendication 1,
**caractérisé en ce que**
le premier et le second rayon de courbure (R1, R2) se succèdent dans le cas de tubes (T) d'épaisseur minimum.

3. Joint fileté conforme à la revendication 1,
**caractérisé en ce que**
le premier et le second rayon de courbure (R1, R2) sont reliés entre eux par une zone de transition (P) dans le cas de tubes (T) ayant une épaisseur moyenne ou maximum.

4. Joint fileté conforme à la revendication 3,
**caractérisé en ce que**
la zone de transition (P) s'étend entre les points des zones arrondies (S1, S2) pour lesquels la tangente en ces points est perpendiculaire à l'axe longitudinal (X) du tube (T).

5. Joint fileté conforme à la revendication 1,
**caractérisé en ce qu'**
entre les becs (N) des deux éléments filetés mâles (2) une section centrale (J) est définie.

6. Joint fileté conforme à la revendication 5,
**caractérisé en ce que**
la section médiane (J) comporte une bague élastomère (4) qui est comprimée latéralement par les becs (N) des tubes (T).

7. Joint fileté conforme à la revendication 6,
**caractérisé en ce que**
la bague élastomère (4) comporte au moins un insert métallique (5) de préférence réalisé en acier inoxydable.
